## Europäisches Patentamt

(19) **European Patent Office**

**Office européen des brevets**

(11) Veröffentlichungsnummer: **0 023 023**

**A1**

(12) # EUROPÄISCHE PATENTANMELDUNG

(21) Anmeldenummer: **80104132.8**

(22) Anmeldetag: **16.07.80**

(51) Int. Cl.³: **C 08 G 18/80**
**C 09 D 3/72**

(30) Priorität: **19.07.79 DE 2929150**

(43) Veröffentlichungstag der Anmeldung:
**28.01.81 Patentblatt 81/4**

(84) Benannte Vertragsstaaten:
**BE CH DE FR GB IT LI LU NL SE**

(71) Anmelder: **CHEMISCHE WERKE HÜLS AG**
**Postfach 1320**
**D-4370 Marl 1(DE)**

(72) Erfinder: **Wolf, Elmar, Dr.**
**Am Böckenbusch 3a**
**D-4690 Herne 2(DE)**

(72) Erfinder: **Gras, Rainer, Dr.**
**An der Ziegelei 91**
**D-4690 Herne 2(DE)**

(74) Vertreter: **Steil, Hanna, Dipl.-Chem. et al,**
**RSP PATENTE-PB 40 Holsterhauser Strasse 160**
**Postfach 2840**
**D-4690 Herne 2(DE)**

(54) **Pulverförmige Überzugsmassen mit hoher Lagerstabilität sowie deren Herstellung.**

(57) Pulverförmige, lagerstabile Überzugsmassen mit einer Korngröße kleiner als 0,25 mm auf Basis hydroxylgruppenhaltiger Polyester und mit ε-Caprolactam blockierten Isophorondiisocyanataddukten sowie gegebenenfalls Katalysatoren und üblichen Zusätzen, wobei als Härter nur teilweise mit ε-Caprolactam blockierte Isophorondiisocyanataddukte eingesetzt werden.

Die Isophorondiisocyanataddukte können aus Isophorondiisocyanat und niedermolekularen Di-und Polyolen, aus trimerisiertem Isophorondiisocyanat allein oder zusammen mit Monomerprodukt, aus Harnstoff-, Biuret- oder Carbodiimidgruppen sowie Harnstoff plus Urethangruppen enthaltendem Isophorondiisocyanat bestehen.

Bei der Herstellung der Überzugsmassen aus Polyester und mittels ε-Caprolactam blockiertem Isophorondiisocyanataddduckt soll 1 Mol Addukt 0,1 - 1 Mol, insbesondere 0,1 - 0,4 Mol, freie NCO-Gruppen enthalten und auf 1 OH-Äquivalent sollen 0,4 - 1,1 NCO-Äquivalente entfallen.

EP 0 023 023 A1

0023023

Marl den 16. Juli 1979

CHEMISCHE WERKE HÜLS Aktiengesellschaft

unser Zeichen: O.Z. 3558

Pulverförmige Überzugsmassen mit hoher Lagerstabilität sowie deren Herstellung

Beschreibung und Beispiele

Es ist bekannt, z.B. gemäß DL-PS 55 820, pulvrige Mischungen aus hochschmelzenden hydroxylgruppenhaltigen Polyestern und Polyisocyanaten, deren Isocyanatgruppen durch Phenol verkappt sind, durch elektrostatisches Spritzen oder Besprühen auf Substrate aufzubringen und sie nachfolgend durch Erhitzen zu Überzügen auszuhärten. Nachteile dieses Verfahrens sind neben der stark geruchsbelästigenden Phenolabspaltung und einer oftmals in Gegenwart von Katalysatoren nicht hinreichenden Reaktivität auch noch Verlaufstörungen, wie z.B. Blasenbildung. Gemäß der Lehre der DE-OS 19 57 483 werden diese Nachteile vermieden, wenn man ε-Caprolactam verkappte Polyisocyanate anstelle der vorher erwähnten mit Phenol verkappten Verbindungen verwendet.

Auch in der DE-OS 21 05 777 werden pulverförmige Überzugsmittel auf der Grundlage von hydroxylgruppenhaltigen Polyestern und ε-Caprolactam blockierten Polyisocyanaten beschrieben, die dadurch gekennzeichnet sind, daß sie als ε-Caprolactam blockierte Polyisocyanate solche auf der Basis von 3-Isocyanatomethyl-3,5,5-trimethyl-cyclohexylisocyanat (im folgenden mit IPDI bzw. Isophrondiisocyanat bezeichnet) oder deren Umsetzungsprodukte mit Polyolen, wobei das Polyisocyanat und das Polyol in solchen Mengen eingesetzt werden, daß das entstehende Produkt mindestens zwei NCO-Gruppen besitzt, enthalten.

Die in den oben genannten Schutzrechten beschriebenen Mischungen aus hydroxylgruppenhaltigen Polyestern und den mit $\epsilon$-Caprolactam blockierten Polyisocyanaten werden bei 180 °C - 200 °C innerhalb von ca. 30 Minuten gehärtet. Es besteht großes Interesse an $\epsilon$-Caprolactam blockierten Polyisocyanaten zur Herstellung von PUR-Pulverhärtern, die bereits deutlich unterhalb 200 °C deblockieren. Durch Katalysatoren, wie z.B. tertiäre Amine, läßt sich zwar die Deblockierungstemperatur senken, man erhält aber dafür ausgehärtete Filme, die hydrolyseanfälliger und weniger oxidationsbeständig sind.

Es wurde nun überraschend und sehr willkommen gefunden, daß die in der DE-OS genannten Härtungstemperaturen um ca. 20-30°C gesenkt werden können, wenn man anstelle der blockierten Isophorondiisocyanat-Addukte bzw. Isophorondiisocyanat/Glykol-Addukte Isophorondiisocyanat-Addukte einsetzt, die nur teilweise mit $\epsilon$-Caprolactam blockiert sind und pro Mol mehr als 0,1 aber höchstens 1,0 Mol freie NCO-Gruppen enthalten.

Bei diesen partiell mit $\epsilon$-Caprolactam blockierten Isophorondiisocyanat-Addukten, die im folgenden näher beschrieben werden, handelt es sich um solche Verbindungen, die durch teilweise $\epsilon$-Caprolactam-Blockierung von Isophorondiisocyanat-Addukten, die aus Urethan-,Harnstoff-,Biuret-,Isocyanurat-,Carbodiimidgruppen bestehen und einen NCO-Gehalt von 17 - 35 % besitzen, erhalten werden. Diese nur teilweise mit $\epsilon$-Caprolactam blockierten Isophorondiisocyanat-Addukte sind fest und schmelzen bei 65 - 150 °C.

Gegenstand der Erfindung sind somit pulverförmige Überzugsmassen mit hoher Lagerstabilität und einer Korngröße kleiner als 0,25 mm, insbesondere 0,02 und 0,06 mm, auf Basis von zwischen 40 - 120 °C schmelzenden, hydroxylgruppenhaltigen Polyestern, mit $\epsilon$-Caprolactam blockierten Isophorondiisocyanat-Addukten und gegebenenfalls Katalysatoren und üblichen Zusätzen, dadurch gekennzeichnet, daß als Härter nur teilweise mit $\epsilon$-Caprolactam blockierte Isophorondiisocyanat-Addukte eingesetzt werden.

Gegenstand der Erfindung ist weiterhin ein Verfahren zur Herstellung der vorgenannten pulverförmigen Überzugsmassen, dadurch gekennzeichnet, daß die hydroxylgruppenhaltigen Polyester in der Schmelze oder in Lösungsmitteln bei Temperaturen von 0 - 150 $^{o}$C, insbesondere 80 - 120 $^{o}$C mit einem mittels $\varepsilon$-Caprolactam blockierten Isophorondiisocyanat-Addukt umgesetzt werden, das pro Mol Addukt 0,1 bis 1 Mol, insbesondere 0,1 - 0,4 Mol freie NCO-Gruppen enthält, und auf 1 OH-Äquivalent 0,4 - 1,1 NCO-Äquivalente entfallen.

Gemäß der Erfindung kann dabei das Isophorondiisocyanat-Addukt aus IPDI und niedermolekularen Polyolen, die im weiteren näher charakterisiert sind, bestehen.

Das Isophorondiisocyanat-Addukt kann auch aus trimerisiertem IPDI allein oder im Gemisch mit monomerem IPDI bestehen und einen NCO-Gehalt von 17 - 35 Gew.% besitzen.

Das Isophorondiisocyanat-Addukt kann ferner aus Harnstoffgruppen enthaltendem IPDI bestehen und einen NCO-Gehalt von 22 - 35 Gew.% besitzen.

Das Isophorondiisocyanat-Addukt kann aus biurethaltigem IPDI bestehen und einen NCO-Gehalt von 20 - 35 Gew.% besitzen.

Das Isophorondiisocyanat-Addukt kann aus einem carbodiimidgruppenhaltigen IPDI bestehen und einen NCO-Gehalt von 22 - 35 Gew.% besitzen.

Das Isophorondiisocyanat-Addukt kann aus dem Harnstoff- und Urethangruppen aufweisenden Isophorondiisocyanat-Addukt aus IPDI und 1-Hydroxy-3-aminomethyl-3,5,5,-trimethylcyclohexan bestehen.

Hydroxylgruppenhaltige Polyester und teilweise mit $\varepsilon$-Caprolactam blockierte Isophorondiisocyanat- Addukte sind in den pulverförmigen Überzugsmitteln in solchen Mengen enthalten, daß auf 1 Hydroxylgruppenäquivalent 0,9 - 1,1 NCO-Gruppenäquivalente kommen. Die erfindungsgemäß eingesetzten teilweise mit $\varepsilon$-Caprolactam blockierten Isophorondiisocyanat-Addukte sind mit den meisten Polyestern gut verträglich und liefern bei erhöhten Temperaturen (80 - 120 $^{o}$C) homogene Schmelzen, die sehr gut zur Herstellung von Sinterpulvern geeignet sind. Auffallend ist die gute Lagerstabilität der erfindungsgemäßen Überzugsmassen im Vergleich zu den in der DE-OS 21 05 777 eingesetzten Gemische. Diese verbesserte Lagerstabilität der erfindungsgemäßen Gemische ist mit sehr großer Wahrscheinlichkeit auf die beim Mischen (Extrudieren bei 80 - 120 $^{o}$C) stattfindende Umsetzung der freien NCO-Gruppen des Härters mit den im großen Überschuß vorhandenen OH-Gruppen des Harzes zurückzuführen. In Gegenwart von Katalysatoren, wie z.B. tertiäre Amine,Zinn-organische Verbindungen wie zB. Dibutylzinndilaurat, oder Acetylacetonate, wie z.B. Zinnacetylacetonat ist die bei 80 - 120 $^{o}$C stattfindende OH/NCO(freie)-Reaktion vollständig. Eine Vernetzung der erfindungsgemäßen Gemische bei 80 - 120 $^{o}$C, einer Temperatur bei der noch keine ε-Caprolactam-Deblockierung der blockierten NCO-Gruppen erfolgt, kann nicht eintreten, da die OH-Gruppen im großen Überschuß zu den NCO-Gruppen vorliegen.

Die Härtungszeiten liegen im Temperaturintervall von 150 - 200 $^{o}$C innerhalb von 30 - 8 Minuten. Überraschenderweise werden nur wenige Gew.% des zur Blockierung verwendeten ε-Caprolactams bei der Härtungsreaktion an die Umgebung abgegeben.

Die gehärteten Überzüge bzw. Beschichtungen zeichnen sich durch sehr gute chemische und mechanische Eigenschaften sowie Chemikalienbeständigkeit aus.

Die erfindungsgemäß eingesetzten, unterhalb 40 $^{o}$C festen und zwischen 40 und 120 $^{o}$C schmelzenden, hydroxylgruppenhaltigen Polyester können aus aliphatischen, cycloaliphatischen und/oder aromatischen Polycarbonsäuren aufgebaut sein.

Geeignete aliphatische, cycloaliphatische und aromatische Polycarbonsäuren sind, wobei die aromatischen ein- oder mehrkernig sein können, z.B. Oxalsäure, Bernsteinsäure, Glutarsäure, 2,2-Dimethylglutarsäure, Adipinsäure, 2,2,4-bzw. 2,4,4-Trimethyladipinsäure, Sebacinsäure, Dodecandicarbonsäure, Terephthalsäure, Methylterephthalsäure, 2,5- und 2,6-Dimethylterephthalsäure,

Chlorterephthalsäure, 2,5-Dichlorterephthalsäure, Fluorterephthalsäure, Isophthalsäure, Trimellithsäure, Naphthalindicarbonsäure, insbesondere die 1,4-, 1,5-, 2,6- und 2,7-Isomeren, Phenylen-1,4-diessigsäure, 4-Carboxyphenoxyessigsäure,
m- und p-Terphenyl-4,4"-dicarbonsäure, Dodecahydrodiphensäure,
Hexahydroterephthalsäure, 4,4'-Dipensäure, 2,2'- und 3,3'-Dimethyl-4,4'-diphensäure, 2,2'-Dibram-4,4'-diphensäure,
Bis-(4-carboxyphenyl)-methan, 1,1- und 1,2-Bis-(4-carboxphenyl)
-äthan, 2,2-Bis-(4-carboxyphenyl)-propan, 1,2-Bis-(4-carboxy-
phenoxy)-äthan, Bis-4-carboxyphenyläther, Bis-4-carboxyphenyl-
sulfid, Bis-4-carboxyphenylketon, Bis-4-carboxyphenylsulfoxid,
Bis-4-carboxyphenylsulfon, 2,8-Dibenzofurandicarbonsäure,
4,4'-Stilbendicarbonsäure und Octadecahydro-m-ter-phenyl-4,4"-di-
carbonsäure u.a. Selbstverständlich können anstelle der genannten
Säuren auch deren funktionelle Derivate, wie Anhydride, Ester
u.a. eingesetzt werden. Es können auch Mischungen der vorgenannten Verbindungen verwendet werden.

Zur Herstellung der hydroxylgruppenhaltigen Polyester werden als
Alkoholkomponente bevorzugt Diole verwendet. Die teilweise Mitverwendung von anderen Polyolen, z.B. Triolen, ist möglich;
Beispiele für geeignete Verbindungen sind: Äthylenglykol,
Propylenglykol, wie 1,2- und 1,3-Propandiol, 2,2-Dimethylpropandiol-(1,3), Butandiole, wie Butandiol-(1,3) bzw. (1,4), Hexandiole, z.B. Hexandiol-(1,6), 2,2,4-Trimethylhexandiol-(1,6),
2,4,4-Trimethylhexandiol-(1,6), Heptandiol-(1,7), Thiodiglykol,
Octadecandiol-(1,18), 2,4-Dimethyl-2-propylheptandiol-(1,3),
Buten- oder Butindiol-(1,4), Diäthylenglykol, Triäthylenglykol,
cis- und trans-1,4-Cyclohexandimethanol, 1,4-Cyclohexandiole,
2,2-Bis-(4-hydroxycyclohexyl)-propan, bisoxyäthyliertes 2,2-Bis-
(4-hydroxyphenyl)-propan, Glycerin, Hexantriol-(1,2,6),
1,1,1-Trimethylolpropan, 1,1,1-Trimethyloläthan, Pentaerythrit,
u.a. Es können auch Mischungen der vorgenannten Verbindungen verwendet werden.

Bei der Herstellung der Polyester wird das Polyol in solchen
Mengen eingesetzt, daß auf 1 Carboxylgruppenäquivalent mehr als
1 OH-Gruppenäquivalent kommen, so daß Polyester mit Hydroxylzahlen zwischen 40 und 240, vorzugseise zwischen 40 und 150, erhalten werden.

Die hydroxylgruppenhaltigen Polyester können in bekannter und üblicher Weise hergestellt werden. Dazu bieten sich insbesondere die beiden nachstehenden Verfahren an.

Im ersten Fall geht man beispielsweise von mineralsäurefreier Terephthalsäure aus, die gegebenenfalls durch Umkristallisation zu reinigen ist. Das Verhältnis der Äquivalente von Säuren zu Alkohol richtet sich naturgemäß nach der gewünschten Molekülgröße und nach der zu erstellenden OH-Zahl. Die Reaktionkomponenten werden nach Zugabe von 0,005 - 0,5 Gew.% - vorzugsweise 0,05 - 0,2 Gew.% - eines Katalysators, z.B. Zinnverbindungen, wie Di-n-butylzinnoxid, Di-n-butylzinndiester u.a., oder Titanester, insbesondere Tetraisopropyltitanat, in einer geeigneten Apparatur unter Durchleiten eines Inertgases, z.B. Stickstoff, erhitzt. Bei ca. 180 $^\circ$C kommt es zur ersten Wasserabspaltung. Das Wasser wird destillativ aus dem Reaktionsgemisch entfernt. Innerhalb von mehreren Stunden wird die Reaktionstemperatur bis auf 240 $^\circ$C erhöht. Das Reaktionsmedium bleibt bis kurz vor Ende der vollständigen Veresterung inhomogen. Nach ca. 24 h ist die Reakton abgeschlossen.

Bei dem zweiten Verfahren geht man beispielsweise von Terephthalsäuredimethylester aus und estert unter Durchleiten eines Inertgases, z.B. Stickstoff, mit den gewünschten Alkoholkomponenten um. Als Umesterungskatalysatoren können wieder Titanester, Dialkylzinnester oder Di-n-butylzinnoxid in Konzentrationen von 0,005 - 0,5 Gew.% eingesetzt werden. Nach dem Erreichen von ca. 120 $^\circ$C kommt es zur ersten Methanolabspaltung. Innerhalb von mehreren Stunden wird die Temperatur auf 220 - 230 $^\circ$C gesteigert. Je nach gewähltem Ansatz ist die Umesterung nach 2 - 24 h abschlossen.

Die Erweichungspunkte des Polyesters müssen in dem beschriebenen Bereich liegen, damit sie sich bei Temperaturen zwischen 70 und etwa 120 $^\circ$C mit den zur Herstellung der erfindungsgemäßen Überzugsmittel notwendigen Zusätzen verarbeiten lassen. Die Er-

weichungspunkte müssen andererseits aber so hoch liegen, daß die aus den Polyestern gewonnenen erfindungsgemäßen Überzugsmittel nicht zu klumpenden, frei fließenden Pulvern mit einer Teilchengröße von 20 bzw. 120µ vermahlen werden können.

Ausgangsverbindungen, die sich zur Herstellung des Isophorondiisocyanat-Addukts eignen, sind z.B. Reaktionsprodukte aus niedermolekularen Diolen oder Polyolen (Äthylenglykol, 1,4-Butandiol, 1,6-Hexandiol, Neopentylglykol, Diäthylenglykol, Triäthylenglykol, Dipropylenglykol, Diäthanolmethylamin, Triäthanolamin, Trimethylolpropan oder -äthan, Pentaerythrit) mit IPDI (NCO/OH = 2 : 1) oder Isocyanuratgruppen aufweisende Polyisocyanate, die in an sich bekannter Weise durch Trimerisierung von IPDI zugänglich sind (GB-PS 1 391 066, DE-OS 23 25 826) Besonders geeignet für die Trimerisierung von IPDI ist das in DE-OS 26 44 684 beschriebene Katalysatorsystem aus Triäthylendiamin (Dabco®)/Propylenoxid. Die Trimerisierung kann in Substanz oder in inerten organischen Lösungsmitteln vorgenommen werden. Zur Durchführung des Trimerisierungsverfahrens ist es wesentlich, die Reaktion bei einem bestimmten NCO-Gehalt der Mischung abzubrechen und zwar vorzugweisweise dann, wenn 30 - 50 % der NCO-Gruppen unter Trimerisierung reagiert haben. Das nicht umgesetzte IPDI wird dann durch Dünnschichtdestillation vom Isocyanurat abgetrennt.

Reines IPDI hat einen NCO-Gehalt von 37,8 %. Der theoretische NCO-Wert des trimerisierten IPDI ist 18,9 %, in praxi liegt er bei 16 - 18 %.

Die so zugänglichen Isocyanurattriisocyanate können entweder als ausschließliche Isocyanatkomponente oder aber im Gemisch mit isocyanuratfreiem IPDI eingesetzt werden. Der Zusatz des isocyanuratfreien IPDI gestattet auf einfache Weise die Eigenschaften der Verfahrensprodukte, insbesondere ihren Schmelzpunkt, ihre Glaserweichungstemperatur sowie ihre Viskosität in gewünschter Weise zu variieren.

Es ist besonders vorteilhaft, das oben erwähnte in situ hergestellte Triisocyanat-Gemisch einzusetzen, welches durch partielle Trimerisierung zugänglich ist.

- 9 -

Weitere Ausgangsstoffe für die Herstellung der Isophrondiisocyanat-Addukte sind Harnstoff- bzw. Biuret- und/oder Carbodiimidgruppen enthaltende IPDI.

Die Herstellung der Harnstoffgruppen enthaltenden IPDI[*] erfolgt gemäß der Lehre der DE-OS 23 41 065 durch Reaktion von IPDI und $H_2O$ bei 80 $^oC$. Die Reaktion ist beendet, wenn pro Mol $H_2O$ 1 Mol $CO_2$ entwickelt worden ist. Der Harnstoffgehalt in einem Reaktionsgemisch aus IPDI und $H_2O$ kann durch das Verhältnis IPDI zu $H_2O$ beliebig eingestellt werden. Ähnlich wie die Herstellung der Harnstoffgruppen enthaltenden IPDI[*] erfolgt die der Biuretgruppen enthaltenden IPDI[*] (DE-OS 23 08 015). Hier findet die Umsetzung des IPDI mit dem $H_2O$, gegebenenfalls in Gegenwart von Katalysatoren 0,1 - 2 %, wie z.B. tertiäre Amine, in zwei Stufen statt, wobei in der 1. Stufe die beiden Komponenten bei 80 $^oC$ so lange erhitzt werden, bis sich pro Mol $H_2O$ 1 Mol $CO_2$ abgespalten hat. In der zweiten Stufe wird dann das Reaktionsgemisch auf 160 $^oC$ so lange erhitzt, bis der NCO-Gehalt der Reaktionsmischung pro Mol $H_2O$ um 3 NCO-Äquivalente gesunken ist.

Die Herstellung der Carbodiimidgruppen enthaltenden IPDI[*] erfolgt durch katalytische Reaktion von IPDI mit Phospholinoxid gemäß der Lehre des US-PS 2 941 966 bei 150 - 190 $^oC$. Die abgespaltene $CO_2$-Menge ist ein Maß für die Konzentration der Carbodiimidgruppen im Reaktionsgemisch.

Zur Durchführung der Blockierungsreaktions wird im allgemeinen die Isocyanatkomponente vorgelegt und $\mathcal{E}$-Caprolactam zugegeben. Die Reaktion kann in Substanz oder auch in Gegenwart geeigneter (inerter) Lösungsmittel durchgeführt werden. Die Blockierungsrekation wird im allgemeinen bei 80 - 140 $^oC$ durchgeführt. Auch können für die Isocyanat-Polyadditionsreaktionen beschleunigende. Katalysatoren, wie z.B. Zinn-II-octoat und/oder tertiäre Amine mitverwendet werden. Die Katalysatoren werden in der Regel in einer Menge zwischen 0,001 - 1 Gew.% bezogen auf die Menge an Verbindungen mit gegenüber Isocyanaten reaktionsfähigen Wasserstoffatomen zugesetzt.

Die bevorzugten Isocyanatgruppen enthaltenden Polyisocyanate sind darüber hinaus durch einen Gehalt an Isocyanuratgruppen

[*] -Addukte

(berechnet als $(CO-N)_3$), an Harnstoffgruppen (berechnet als HN-CO-NH), an Biuretgruppen (berechnet als HN-CO-N-CO-NH), sowie an Carbodiimidgruppen (brechnet als -N=C=N-), von 2 Gew.% bis 14 Gew.%, vorzugsweise von 3 - 8 Gew.% ausgezeichnet.

Der Gehalt an endständig in blockierter Form vorliegenden NCO-Gruppen (berechnet als NCO) der Isophorondiisocyanat-Addukte liegt bei 3 - 20, vorzugsweise 8 - 18 Gew.%, der der freien NCO-Gruppen bei 1 - 8 Gew.%, vorzugsweise bei 2 - 5 Gew.%.

Die Blockierung kann, wie bereits erwähnt, auch in Lösungsmitteln durchgeführt werden. Als Lösungsmittel für diese Reaktion kommen nur solche infrage, die mit den Polyisocyanaten nicht reagieren, beispielsweise Ketone, wie Aceton, Methyläthylketon, Methylisobutylketon, Cyclopentanon, Cyclohexanon u.a.; Aromaten, wie Benzol, Toluol, Xylole, Chlorbenzol, Nitrobenzol u.a.; cyclische Äther, wie Tetrahydrofuran, Dioxan u.a.; Ester, wie Methylacetat, n-Butylacetat, u.a.; aliphatische Chlorkohlenwasserstoffe, wie Chloroform, Tetrachlorkohlenstoff u.a. sowie aprotische Lösungsmittel, wie Dimethylformamid, Dimethylacetamid, Dimethylsulfoxid usw.

Zur Verbesserung der Verlaufeigenschaften der Lacke werden bei der Zubereitung sogenannte Verlaufmittel zugesetzt. Bei diesen Mitteln kann es sich um chemische Verbindungen bzw. deren Gemische sehr unterschiedlicher chemischer Art handeln, z.B. polymere oder monomere Verbindungen, Acetale, wie

Polyvinylformal, Polyvinylacetal, Polyvinybutyral, Polyvinylacetobutyral bzw.
Di-2-äthylhexyl-i-butyraldehyd-acetal,
Di-2-äthylhexyl-n-butyraldehyd-acetal,
Diäthyl-2-äthylhexanol-acetal,
Di-n-butyl-2-äthyl-hexanol-acetal,
Di-i-butyl-2-äthylhexanol-acetal,
Di-2-äthylhexyl-acetaldehyd-acetal u.a.,

Äther, wie die polymeren Polyäthylen- und Polypropylenglykole, Mischpolymerisare aus n-Butylacrylat und Vinylisobutyläther, Keton-Aldehyd-Kondensationsharze, feste Siliconharze oder auch Gemische von Zinkseifen, von Fettsäuren und aromatischen Carbonsäuren u.ä. Derartige Verlaufmittel können in den Ansätzen in Mengen von 0,2 - 5,0 Gew.%, bzogen auf die Gesamtmenge des Pulverlackes, enthalten sein.

Die Umsetzung der hydroxylgruppenhaltigen Polyester mit den durch Deblockierung freigesetzten Polyisocyanaten kann durch Katalysatoren beschleunigt werden. Beispiele für geeignete Katalysatoren sind organische Zinnverbindungen, wie Di-n-butylzinndilaurat und tertiäre Amine.

Die anderen Bestandteile des heißhärtbaren Pulverlackgemisches, wie Pigmente, Farbstoffe, Füllstoffe, Thixotropiemittel, UV- und Oxidationsstabilisatoren u.a. können, bezogen auf die Menge des festen Polyesters, innerhalb eines weiten Bereiches schwanken.

Die Herstellung des pulverförmigen Überzugsmittels erfolgt z.B. in dem man die festen hydroxylgruppenhaltigen Polyester und die blockierten Polyisocyanate, gegebenenfalls nach Zugabe der genannten Lackzusätze, in den genannten Mengenverhältnissen mischt und bei erhöhter Temperatur, bei der Polyester und blockiertes Polyisocyanat geschmolzen vorliegen, aber mindestens 30 °C unterhalb der Aufspalttemperatur des Härtungsmittels extrudiert, abkühlt und anschließend auf eine Korngröße kleiner als 0,25 mm, vorzugsweise $\zeta$100 $\mu$, und einem Korngrößenmaximum zwischen 20 und 60 $\mu$, vorzugsweise zwischen 30 und 50 $\mu$, mahlt und gegebenenfalls die größere Fraktion durch Siebung entfernt.

Die Aufbringung des Pulverlackes auf die zu überziehenden Körper kann nach bekannten Methoden, z.B. elektrostatisches Pulverspritzen, Wirbelsintern, elektrostatisches Wirbelsintern etc., geschehen.

Nach dem Aufbringen des Pulverlackes nach einer der beschriebenen Methoden auf die zu lackierenden Gegenstände werden sie zur Aushärtung auf Temperaturen oberhalb der Aufspalttemperatur des Härtungsmittels, d.h. 150 - 200 °C, vorzugsweise 160 - 180 °C, erhitzt. Danach besitzt der resultierende Überzug die beschriebenen Vorteile.

Zur Beschichtung mit den erfindungsgemäßen pulverförmigen Überzugsmitteln eignen sich alle Substrate, die die angegebenen Härtungstemperaturen ohne Einbuße der mechanischen Eigenschaften vertragen, wie Metallflächen, Glasflächen u.ä.

Die erfindungsgemäßen pulverförmigen Überzugsmittel werden durch die nachstehenden Beispiele illustriert:

Beispiele

A. Herstellung teilweise blockierter Isophorondiisocyanat-Addukte

A1a  Herstellung des IPDI-Adduktes aus IPDI und Diäthylenglkol

Zu 444 Gew.-T. IPDI wurden bei 80 °C unter heftigem Rühren 106 Gew.-T Diäthylenglykol zugetropft. Nach Beendigung der Diäthylenglykolzugabe wurde zur Vervollständigung der Reaktion noch 2 h bei 100 °C erhitzt. Der NCO-Gehalt des Reaktionsproduktes lag bei 15,1 %.

A1b  ε-Caprolactamblockierung des IPDI-Adduktes

Zu 550 Gew.-T. des in A1a hergestellten IPDI-Adduktes wurden bei 100 °C 147 Gew.-T. ε-Caprolactam so zugegeben, daß die Reaktionstemperatur nicht über 110 °C anstieg. Zur Vervollständigung der Reaktion wurde das Reaktionsgemisch noch 2 h bei 120 °C gehalten

| | |
|---|---|
| Freier NCO-Gehalt | 4,2 % |
| Blockierter NCO-Gehalt | 7,8 % |
| Schmelzbereich | 68 - 72 °C |
| Glasumwandlungstemperatur (DTA) | 30 - 41 °C |

_A2a_  Herstellung des IPDI/Isocyanurat-Gemisches

1000 Gew.-T. IPDI wurden mit 0,6 Gew.-T des in der DE-OS 26 44 684 beschriebenen Katalysatorsystems aus 2 Gew.-T. Propylenoxid + 1 Gew.-T. Dabco ® 1,5 h bei 140 °C erhitzt. Während dieser Zeit fiel der NCO-Gehalt des Reaktionsgemisches auf 27,5 %. Nach Abkühlung auf Raumtemperatur betrug der NCO-Gehalt der Reaktionsmischung 26 %. Während das Reaktionsgemisch abkühlte, wurde Vakuum angelegt.

_A2b_  Blockierung des IPDI/Isocyanurat-Gemisches

Zu 161,5 Gew.-T. des 8a hergestellten Isocyanuratgruppen enthaltenden Isocyanats wurden bei 100 °C portionsweise 77,6 Gew.-T. $\epsilon$-Caprolactam zu zugegeben, daß die Reaktionstemperatur nicht über 120 °C anstieg. Zur Vervollständigung der Reaktion wurde das Reaktionsgemisch noch 2 h bei 120 °C erhitzt.

| | |
|---|---|
| Freier NCO-Gehalt | 5,49 % |
| Blockierter NCO-Gehalt | 12,06 % |
| Schmelzbereich | 72 - 80 °C |
| Glasumwandlungstemperatur (DTA) | 40 - 53 °C |

_A3a_  Herstellung des IPDI/Isocyanurat-Gemisches

1000 Gew.-T. IPDI wurden mit 0,6 Gew.-T. des in A2a beschriebenen Katalysatorsystems 2 h bei 140 °C erhitzt. Während dieser Zeit fiel der NCO-Gehalt des Reaktionsgemisches auf 26,3 % NCO. Daraufhin wurde unter Vakuum (10 Torr) auf Raumtemperatur abgekühlt. Der NCO-Gehalt betrug 24 %.

A3b  Blockierung des IPDI/Isocyanurat-Gemisches

Zu 179 Gew.-T. des in A2a hergestellten Isocyanatoisocyanurats wurden bei 110 °C portionsweise 78,6 Gew.-T.
ε-Caprolactam gegeben. Nach beendeter ε-Caprolactamzugabe wurde das Reaktionsgemisch zur Vervollständigung
der Umsetzung noch 2 h bei 125 °C erhitzt.

Freier NCO-Gehalt                        5,03 %
Blockierter NCO-Gehalt                   11,52 %
Schmelzbereich                           89 - 95 °C
Glasumwandunlgstemperatur (DTA)          64 - 73 °C

A4a  Herstellung eines IPDI-Adduktes

Zu 1332 Gew.-T. IPDI wurden bei 100 °C 171 Gew.T
1-Hydroxy-3-aminomethyl-3.5,5-trimethylcyclohexan
portionsweise gegeben und solange erhitzt bis der
NCO-Gehalt des Reaktionsgemisches bei 27,8 % lag.

A4b  Blockierung des IPDI-Adduktes

Zu 1503 Gew.-T. des in A4a  hergestellten Isocyanat-
Adduktes wurden bei 100 °C innerhalb 1 h 1017 Gew.-T.
ε-Caprolactam gegeben und zur Vervollständigung der
Reaktion noch weitere 2 h bei 120 °C erhitzt.

Freier NCO-Gehalt                        1,6 %
Blockierter NCO-Gehalt                   15  %
Schmelzbereich                           69 - 73 °C
Glasumwandlungstemperatur (DTA)          40 - 48 °C

A5a  Herstellung des IPDI-Adduktes

766 Gew.-T. IPDI wurden mit 18 Gew.-T. $H_2O$ so lange
bei 80 °C erhitzt, bis der NCO-Gehalt der Reaktionsmischung
auf 27,8 % NCO gesunken war.

A5b Blockierung des IPDI-Adduktes
-------------------------------

151 Gew.-T. des in A5a hergestellten Harnstoffgruppen enthaltenden IPDI wurden mit 84,75 Gew.-T. ε-Caprolactam bei
120 °C portionsweise versetzt. Das Reaktionsgemisch wurde
so lange bei 120 °C weitererhitzt, bis sein NCO-Gehalt
auf 4,5 % gesunken war.

| | |
|---|---|
| Freier NCO-Gehalt | 4,45 % |
| Blockierter NCO-Gehalt | 13,36 % |
| Schmelzbereich | 82 - 94 °C |
| Glasumwandlungstemperatur (DTA) | 51 - 65 °C |

B. Herstellung der Polyester

B1 9 Mol (1746 g) Dimethylterephthalat, 4 Mol (416 g)
2,2-Dimethylpropandiol-1,3, 3,75 Mol (540 g) 1,4-Dimethylolcyclohexan und 2,5 Mol (335 g) Trimethylolpropan wurden
in einem 5 l Glaskolben zusammengegeben und mit Hilfe
eines Ölbades erwärmt. Nachdem die Stoffe zum größten
Teil aufgeschmolzen waren, wurde bei einer Temperatur von
160 °C 0,05 Gew.-% Di-n-butylzinnoxid als Veresterungskatalysator zugesetzt. Die erste Methanolabspaltung trat
bei ca. 170 °C Sumpftemperatur auf. Die Umesterung war
nach ca. 14 h abgeschlossen, wobei bei einer maximalen
Temperatur in der Schlußphase von 220 °C umgeestert wurde.
Der Polyester wurde auf 210 °C abgekühlt und durch Evakuierung bei ca. 1 mm Hg weitgehend von flüchtigen Anteilen befreit. Während der gesamten Kondensationszeit
wurde das Sumpfprodukt gerührt. Ein Stickstoffstrom von
ca. 30 l/h sorgte für die bessere Austragung des Methanols.

Physikalische Daten:

| | | |
|---|---|---|
| Hydroxlzahl | : | 100 - 105 mg KOH/g |
| Säurezahl | : | < 2 mg KOH/g |
| Schmelzbereich | : | 85 - 91 °C |
| Glasumwandlungstemperatur (DTA) | : | 42 - 54 °C |
| Viskosität bei 160 °C | : | ca. 20000 mm$^2$/sec. |

- 15 -

B2  9 Mol (1494 g) Terephthalsäure, 9 Mol (1746 g) Dimethylterephthalat, 3 Mol (354 g ) Hexandiol-1,6, 3 Mol (432 g) Dimethylolcyclohexan, 13 Mol (1352 g) Neopentylglykol und 1 Mol (134 g) Trimethylolpropan wurden wie in Beispiel B1 beschrieben zur Umesterung/Veresterung gebracht.

Physikalische Daten:

| | | |
|---|---|---|
| Hydroxlzahl | : | 42 - 52 mg KOH/g |
| Säurezahl | : | 4 - 6 mg KOH/g |
| Schmelzbereich | : | 75 - 79 $^{\circ}$C |
| Glasumwandlungstemperatur (DTA) | : | 48 - 58 $^{\circ}$C |
| Viskosität bei 160 $^{\circ}$C | : | 12 000 mm$^2$/sec. |

## C. Beispiele für erfindungsgemäße Polyurethanpulverlacke

### Beispiel 1

#### C1a Klarlack

100 Gew.-T. des gemahlenen Polyesters gemäß B1 wurden mit 62,4 Gew.-T blockiertem Isocyanat-Addukt gemäß A1b und 0,74 Gew.-T Acrylat-Verlaufmittel in der Schmelze bei Temperaturen von 120 - 140 $^{\circ}$C mit einem Intensivrührer homogenisiert. Nach dem Erkalten wurde die homogene Schmelze gebrochen und anschließend mit einer Stiftmühle auf eine Korngröße von <100 µ gemahlen. Das so hergestellte Klarlack-Pulver wurde mit einer elektrostatischen Pulverspritzanlage bei 60 kV auf entfettete Stahlbleche appliziert und in einem Umlufttrockenschrank bei Temperaturen zwischen 170 und 200 $^{\circ}$C eingebrannt.

0023023

| Einbrenn-bedingungen | Mechanische Kenndaten | | | | | |
|---|---|---|---|---|---|---|
| Zeit/Temp. | SD | HK | HB | ET | GS | Imp.rev. |
| 12'/200 $^o$C | 40-60 | 190 | 125 | >10 | 0 | >82 |
| 15'/190 $^o$C | 35-50 | 195 | 111 | >10 | 0 | >82 |
| 18'/180 $^o$C | 40-50 | 198 | 111 | >10 | 0 | >82 |
| 25'/170 $^o$C | 35-60 | 190 | 125 | >10 | 0 | >82 |

Die Abkürzungen in dieser und den folgenden Tabellen bedeuten:

SD        = Schichtdicke in

HK        = Härte n. König in sec (DIN 53 157)

HB        = Härte n. Buchholz     (DIN 53 153)

ET        = Tiefung n. Erichsen in mm (DIN 53 156)

GS        = Gitterschnittprüfung      (DIN 53 151)

GG 60$^o$      = Messung des Glanzes n. Gardner (ASTM - D 523) Imp.rev. = Impact reverse in inch·1b

## C1b  Pigmentierter Lack

792,1 Gew.-T. Polyester gemäß B1

431,8 Gew.-T. blockiertes Isocyanat-Addukt gemäß A1b

676,1 Gew.-T. Weißpigment ($TiO_2$)

100,0 Gew.-T. Verlaufmittel - Masterbatch (10 % Acrylat) in Polyester gemäß B1

(Siliconöl-Hersteller:Bayer AG)

Die gemahlenen Produkte Polyester, blockiertes Isocyanat, Verlaufmittel-Masterbatch werden mit dem Weißpigment in einem Kollergang innig vermischt und anschließend im Extruder bei 100 - 130 $^o$C homogenisiert. Nach dem Erkalten wird das Extrudat gebrochen und mit einer Stiftmühle auf eine Korngröße <100 µ gemahlen. Das so hergesellte Pulver wird mit einer elektrostatischen Pulverspritzanlage bei 60 kV auf entfettete Eisenbleche appliziert und in einem Umlufttrockenschrank bei Temperaturen zwischen 160 und 200 $^{\circ}$C eingebrannt.

| Einbrenn-bedingungen | Mechanische Kenndaten | | | | | | |
|---|---|---|---|---|---|---|---|
| Zeit/Temp. | SD | HK | HB | ET | GS | Imp.$_{rev.}$ | GG 60$^{\circ}$ |
| 12'200 $^{\circ}$C | 40-60 | 180 | 111 | 6,6-8,8 | 0 | 70 | 95 |
| 15'190 $^{\circ}$C | 40-60 | 184 | 125 | 6,4-8,1 | 0 | 60 | >100 |
| 15'180 $^{\circ}$C | 40-65 | 179 | 100 | 5,0-6,5 | 0 | 70 | 96 |
| 20'180 $^{\circ}$C | 45-75 | 186 | 111 | 6,7-7,8 | 0 | 60 | >100 |
| 25'180 $^{\circ}$C | 50-70 | 188 | 111 | 7,3-8,5 | 0 | 80 | 97 |
| 25'170 $^{\circ}$C | 35-55 | 182 | 100 | 5,2-6,4 | 0 | 40 | 98 |
| 30'170 $^{\circ}$C | 45-65 | 181 | 111 | 6,6-8,2 | 0 | 60 | >100 |

Beispiel 2

C2a  Klarlack

Der Polyester gemäß B2 wurde mit dem blockierten Isocyanat- Addukt gemäß A3b in äquivalenter Menge umgesetzt und so wie in Beispiel C1a beschrieben hergestellt.

100,00 Gew.-T. Polyester gemäß B2
 26,78 Gew.-T. blockiertes Isocyanat gemäß A3b
  0,63 Gew.-T. Acrylat-Verlaufmittel

Der Klarlack wurde wie in Beispiel C1a beschrieben appliziert und im Temperaturbereich zwischen 160 und 200 $^{\circ}$C eingebrannt.

| Einbrenn-bedingungen | Mechanische Kenndaten | | | | | |
|---|---|---|---|---|---|---|
| Zeit/Temp. | SD | HK | HB | ET | GS | Imp.rev. |
| 10'200 °C | 30-55 | 193 | 125 | >10 | 0 | >82 |
| 12'180 °C | 40-65 | 194 | 111 | >10 | 0 | >82 |
| 18'180 °C | 45-60 | 190 | 125 | >10 | 0 | >82 |
| 25'170 °C | 35-65 | 195 | 125 | >10 | 0 | >82 |
| 30'160 °C | 40-60 | 197 | 111 | >10 | 0 | >82 |

C2b  Pigmentierter Lack

Nach dem in Beispiel C1b beschriebenen Verfahren wurde der Pulverlack mit folgender Rezeptur hergestellt, verarbeitet und appliziert.

595,5 Gew.-T. Polyester gemäß B2

174,5 Gew.-T. blockiertes Isocyanat gemäß A3b

560,0 Gew.-T Weißpigment ($TiO_2$)

 70,0 Gew.-T. Verlaufmittel-Masterbatch (10 % Acrylat)
            in Polyester gemäß B2

Der pigmentierte Pulverlack wurde gemäß C1b zwischen 160 und 200 °C eingebrannt

| Einbrenn-bedingungen | Mechanische Kenndaten | | | | | | |
|---|---|---|---|---|---|---|---|
| Zeit/Temp. | SD | HK | HB | ET | GS | Imp_rev | GG 60° |
| 10'200 °C | 40-60 | 180 | 100 | 9,6-10,8 | 0 | >82 | 92 |
| 15'180 °C | 55-70 | 190 | 100 | 9,0- 9,6 | 0 | 60 | 94 |
| 20'180 °C | 60-70 | 191 | 111 | 10,2-10,8 | 0 | >82 | 96 |
| 25'180 °C | 60-80 | 192 | 111 | 10,7-11,6 | 0 | >82 | 95 |
| 25'170 °C | 65-75 | 188 | 100 | 8,6- 9,9 | 0 | >82 | 97 |
| 30'170 °C | 50-70 | 190 | 111 | 10,2-10,9 | 0 | >82 | 94 |
| 35'160 °C | 65-80 | 187 | 100 | 7,8- 9,5 | 0 | 50 | 92 |

Beispiel 3

C3a  Pigmentierter Lack 40 % - Pigment

Nach dem in Beispiel C1b beschriebenen Verfahren wurde der Pulverlack mit folgender Rezeptur hergestellt, appliziert und zwischen 170 und 200 °C eingebrannt.


603,4 Gew.-T.Polyester gemäß B2

166,6 Gew.-T.blockiertes Isocyanat gemäß A2b

560,0 Gew.-T.Weißpigment $(TiO_2)$

70,0 Gew.-T.Verlaufmittel-Masterbatch gemäß C2b

| Einbrenn- bedingungen | Mechanische Kenndaten | | | | | | |
|---|---|---|---|---|---|---|---|
| Zeit/Temp. | SD | HK | HB | ET | GS | Imp.rev. | GG 60 $^{\circ}$ |
| 8'200 $^{\circ}$C | 60-70 | 188 | 100 | 8,7-9,1 | 0 | 50 | 92 |
| 10'200 $^{\circ}$C | 60-75 | 186 | 111 | 9,8-10,5 | 0 | >82 | 94 |
| 15'180 $^{\circ}$C | 60-80 | 189 | 100 | 8,4-9,3 | 0 | 40 | 95 |
| 20'180 $^{\circ}$C | 55-70 | 185 | 111 | 9,9-10,6 | 0 | >82 | 93 |
| 25'170 $^{\circ}$C | 50-60 | 188 | 100 | 9,2-9,9 | 0 | >82 | 94 |
| 30'160 $^{\circ}$C | 55-75 | 190 | 100 | 8,4-9,2 | 0 | 60 | 96 |

## C3b Pigmentierter Lack 45 % - Pigment

Nach dem in Beispiel C1b beschriebenen Verfahren wurde der Pulverlack mit folgender Rezeptur hergestellt, appliziert und zwischen 160 - 200 $^{\circ}$C eingebrannt.

547,4 Gew.-T. Polyester gemäß B2
152,6 Gew.-T. blockiertes Isocyanat-Addukt gemäß A3b
630,0 Gew.-T. Weißpigment (TiO$_2$)
 70,0 Gew.-T. Verlaufmittel - Masterbatch gemäß C2b

| Einbrenn- bedingungen | Mechanische Kenndaten | | | | | | |
|---|---|---|---|---|---|---|---|
| Zeit/Temp. | SD | HK | HB | ET | GS | Imp.rev. | GG 60$^{\circ}$ |
| 10'/200$^{\circ}$C | 50-65 | 180 | 100 | 9,0-9,8 | 0 | >82 | 100 |
| 12'/190$^{\circ}$C | 60-80 | 182 | 111 | 9,2-9,5 | 0 | 70 | 100 |
| 18'/180$^{\circ}$C | 55-75 | 186 | 100 | 8,9-9,2 | 0 | 50 | 100 |
| 20'/180$^{\circ}$C | 60-80 | 184 | 111 | 9,4-10,5 | 0 | >82 | 98 |
| 30'/170$^{\circ}$C | 65-80 | 185 | 100 | 7,6-8,2 | 0 | 50 | 100 |

Beispiel 4

C4 Pigmentierter Lack

Nach dem in Beispiel C1b beschriebenen Verfahren wurde der Pulverlack mit folgender Rezeptur hergestellt, appliziert und zwischen 170 - 200 $^{o}$C eingebrannt.

596,8 Gew.-T. Polyester gemäß B1
303,2 Gew.-T. blockiertes Isocyanat-Addukt gemäß A4b
525,0 Gew.-T. Weißpigment (TiO$_2$)
 75,0 Gew.-T. Verlaufmittel - Masterbatch gemäß C1b

| Einbrenn-bedingungen | Mechanische Kenndaten | | | | | | |
|---|---|---|---|---|---|---|---|
| Zeit/Temp. | SD | HK | HB | ET | GS | Imp.$_{rev.}$ | GG 60$^{o}$ |
| 20'/200$^{o}$C | 60-80 | 182 | 100 | 9,2-9,8 | 0 | 70 | 96 |
| 20'/190$^{o}$C | 50-70 | 186 | 100 | 8,6-9,0 | 0 | 60 | 95 |
| 25'/180$^{o}$C | 55-75 | 184 | 100 | 5,5-6,2 | 0 | 40 | 98 |
| 30'/180$^{o}$C | 60-80 | 189 | 100 | 8,8-9,2 | 0 | 60 | 95 |
| 35'/170$^{o}$C | 55-75 | 187 | 100 | 5,8-7,6 | 0 | 50 | 94 |

Beispiel 5

C5 Pigmentierter Lack

Nach dem in Beispiel C1b beschriebenen Verfahren wurde der Pulverlack mit folgender Rezeptur hergestellt, appliziert und zwischen 160 - 200 $^{o}$C eingebrannt.

522,4 Gew.-T. Polyester gemäß B1
247,6 Gew.-T. blockiertes Isocyanat-Addukt gemäß A5b
560,0 Gew.-T. Weißpigment (TiO$_2$)
 70,0 Gew.-T. Verlaufmittel - Masterbatch gemäß C1b

| Einbrenn-bedingungen | Mechanische Kenndaten | | | | | | |
|---|---|---|---|---|---|---|---|
| Zeit/Temp. | SD | HK | HB | ET | GS | Imp.$_{rev.}$ | GG 60$^{o}$ |
| 12'/200$^{o}$C | 60-70 | 184 | 100 | 9,8-10,5 | 0 | ⪖82 | 97 |
| 15'/180$^{o}$C | 50-70 | 186 | 100 | 9,5- 9,8 | 0 | 70 | 96 |
| 20'/180$^{o}$C | 60-80 | 188 | 111 | 10 -10,5 | 0 | ⪖82 | 98 |
| 25'/180$^{o}$C | 55-75 | 187 | 111 | 10,1-11 | 0 | ⪖82 | 100 |
| 20'/170$^{o}$C | 70-90 | 185 | 100 | 9,7-10,1 | 0 | 60 | 99 |
| 25'/170$^{o}$C | 60-70 | 186 | 111 | 10 -10,9 | 0 | 80 | 97 |
| 35'/160$^{o}$C | 55-80 | 187 | 111 | 9,7-10,1 | 0 | 70 | 98 |

Marl, den 16. Juli 1979

CHEMISCHE WERKE HÜLS Aktiengesellschaft

unser Zeichen: O.Z. 3558

---

Pulverförmige Überzugsmassen mit hoher Lagerstabilität
sowie deren Herstellung

---

Patentansprüche

1. Pulverförmige Überzugsmassen mit hoher Lagerstabilität und einer Korngröße kleiner als 0,25 mm, insbesondere 0,02 und 0,06 mm, auf Basis von zwischen 40 - 120 $^{o}$C schmelzenden, hydroxylgruppenhaltigen Polyestern, mit $\epsilon$-Caprolactam blockierten Isophorondiisocyanat-Addukten und gegebenenfalls Katalysatoren und üblichen Zusätzen, d a d u r c h g e k e n n z e i c h n e t, daß als Härter nur teilweise mit $\epsilon$-Caprolactam blockierte Isophorondiisocyanat-Addukte eingesetzt werden.

2. Pulverförmige Überzugsmassen nach Anspruch 1, d a d u r c h g e k e n n z e i c h n e t, daß das Isophorondiisocyanat-Addukt aus Isophorondiisocyanat und niedermolekularen Polyolen besteht.

3. Pulverförmige Überzugsmassen nach Anspruch 1, d a d u r c h g e k e n n z e i c h n e t, daß das Isophorondiisocyanat-Addukt aus trimerisiertem Isophorondiisocyanat allein oder im Gemisch mit monomeren Isophorondiisocyanat besteht und einen NCO-Gehalt von 17 - 35 Gew.-% besitzt.

4. Pulverförmige Überzugsmassen nach Anspruch 1, d a d u r c h
g e k e n n z e i c h n e t, daß das Isophorondiisocyanat-
Addukt aus Isophorondiisocyanat und Harnstoffgruppen enthaltendem Isophorondiisocyanat besteht und einen NCO-Gehalt von 22 - 35 Gew.% besitzt.

5. Pulverförmige Überzugsmassen nach Anspruch 1, d a d u r c h
g e k e n n z e i c h n e t, daß das Isophorondiisocyanat-
Addukt aus biurethaltigem Isophorondiisocyanat besteht und
einen NCO-Gehalt von 20 - 35 Gew.% besitzt.

6. Pulverförmige Überzugsmassen nach Anspruch 1, d a d u r c h
g e k e n n z e i c h n e t, daß das Isophorondiisocyanat-
Addukt aus carbodiimidgruppenhaltigem Isophorondiisocyanat
besteht und einen NCO-Gehalt von 22 - 35 Gew.% besitzt.

7. Pulverförmige Überzugsmassen nach Anspruch 1, d a d u r c h
g e k e n n z e i c h n e t, daß das Isophorondiisocyanat-
Addukt Harnstoff- und Urethangruppen aufweist und aus
Isophorondiisocyanat und 1-Hydroxy-3-aminomethyl-3,5,5-trimethylcyclohexan besteht.

8. Verfahren zur Herstellung der vorgenannten pulverförmigen
Überzugsmassen nach den Ansprüchen 1 - 7, d a d u r c h
g e k e n n z e i c h n e t, daß die hydroxylgruppenhaltigen
Polyester in der Schmelze oder in Lösungsmitteln bei Temperaturen von 0 - 150 $^{\circ}$C, insbesondere 80 - 120 $^{\circ}$C mit einem
mittels $\varepsilon$-Caprolactam blockierten Isophorondiisocyanat-
Addukt umgesetzt werden, das pro Mol Addukt 0,1 bis 1 Mol,
insbesondere 0,1 - 0,4 Mol freie NCO-Gruppen enthält,
und auf 1 OH-Äquivalent 0,4 - 1,1 NCO-Äquivalente entfallen.

7472/40-sch

### Europäisches Patentamt

## EUROPÄISCHER RECHERCHENBERICHT

| | EINSCHLÄGIGE DOKUMENTE | | KLASSIFIKATION DER ANMELDUNG (Int Cl.) |
|---|---|---|---|
| Kategorie | Kennzeichnung des Dokuments mit Angabe. soweit erforderlich. der maßgeblichen Teile | betrifft Anspruch | |
| X | <u>US - A - 4 055 550</u> (K.A.P. PANAN-DIKER et al.)<br><br> * Spalten 10-12; Ansprüche 1-4, 8; Spalte 1, Zeilen 6-53; Spalte 3, Zeilen 14-42; Spalte 3, Zeile 64 bis Spalte 4, Zeile 14; Spalte 7, Zeilen 11-33; Spalten 7 und 8 Beispiele 1,2; Spalte 9, Beispiel 5 *<br><br>-- | 1,2,8 | C 08 G 18/80<br>C 09 D 3/72 |
| X | <u>EP - A - 0 000 798</u> (VEBA-CHEMIE)<br><br> * Anspruch; Seite 4, Absätze 2-4; Seite 5, Absatz 4 *<br><br>-- | 1,3,8 | **RECHERCHIERTE SACHGEBIETE** (Int. Cl.)<br><br>C 08 G 18/80<br>18/78<br>18/79 |
| | <u>FR - A - 2 094 785</u> (BAYER)<br><br> * Seite 6; Ansprüche 1,2; Seite 2, Zeilen 17-22; Seite 4, Zeilen 5-10 * | 1,8 | |
| D | & DE - A - 1 957 483<br><br>-- | | |
| | <u>FR - A - 2 124 567</u> (VEBA-CHEMIE)<br><br> * Seite 18; Ansprüche 1,2; Seite 2, Zeile 10 bis Seite 3, Zeile 5; Seiten 12-14; Beispiel 4 * | 1,2,8 | |
| D | & DE - A - 2 105 777<br><br>-- | | **KATEGORIE DER GENANNTEN DOKUMENTE** |
| | <u>FR - A - 2 234 357</u> (BRIGGS & TOWNSEND)<br><br> * Seite 8; Ansprüche 1-4; Seite 4, Zeilen 1-7 *<br><br>-- | 1 | X: von besonderer Bedeutung<br>A: technologischer Hintergrund<br>O. nichtschriftliche Offenbarung<br>P: Zwischenliteratur<br>T: der Erfindung zugrunde liegende Theorien oder Grundsätze |
| | <u>DE - A - 2 246 620</u> (REICHOLD-<br> ./. | 1 | E. kollidierende Anmeldung<br>D: in der Anmeldung angeführtes Dokument<br>L. aus andern Gründen angeführtes Dokument |

Der vorliegende Recherchenbericht wurde für alle Patentansprüche erstellt

| Recherchenort | Abschlußdatum der Recherche | Prüfer |
|---|---|---|
| Den Haag | 17-09-1980 | V. PUYMBROECK |

EPA form 1503.1  06.78